(19) Europäisches Patentamt
European Patent Office
Office européen des brevets

(11) **EP 4 325 385 B1**

(12) **EUROPEAN PATENT SPECIFICATION**

(45) Date of publication and mention
of the grant of the patent:
**11.03.2026 Bulletin 2026/11**

(51) International Patent Classification (IPC):
*G06F 21/56* (2013.01)      *G06N 20/00* (2019.01)
*G06N 3/09* (2023.01)       *G06N 5/045* (2023.01)
*H04L 9/40* (2022.01)       *H04L 65/1069* (2022.01)

(21) Application number: **21940697.2**

(22) Date of filing: **17.05.2021**

(52) Cooperative Patent Classification (CPC):
**G06F 21/566; G06N 3/09; G06N 5/045;
H04L 63/1425; H04L 63/1466;** H04L 65/1069

(86) International application number:
**PCT/JP2021/018654**

(87) International publication number:
**WO 2022/244077 (24.11.2022 Gazette 2022/47)**

(54) **ESTIMATION DEVICE, ESTIMATION METHOD, AND ESTIMATION PROGRAM**

SCHÄTZVORRICHTUNG, SCHÄTZVERFAHREN UND SCHÄTZPROGRAMM

DISPOSITIF D'ESTIMATION, PROCÉDÉ D'ESTIMATION ET PROGRAMME D'ESTIMATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.02.2024 Bulletin 2024/08**

(73) Proprietor: **NTT, Inc.
Tokyo 100-8116 (JP)**

(72) Inventors:
• **NAGAI, Tomohiro
Musashino-shi, Tokyo 180-8585 (JP)**
• **MINAMI, Takuya
Musashino-shi, Tokyo 180-8585 (JP)**

(74) Representative: **Hoffmann Eitle
Patent- und Rechtsanwälte PartmbB
Arabellastraße 30
81925 München (DE)**

(56) References cited:
**EP-A1- 2 618 538        EP-A1- 4 307 637
JP-A- 2007 515 867     US-A1- 2012 159 625
US-B2- 10 747 887**

• **FUKAI, KEN : "Estimating the causative function
of performance failure by analyzing the
execution path", IPSJ SIG TECHNICAL REPORT,
vol. 2015-OS-135, no. 12, 17 November 2015
(2015-11-17), JP
, pages 1 - 7, XP009541616, ISSN: 2188-8795**

## Description

Technical Field

The present invention relates to an estimation device, an estimation method, and an estimation program.

Background Art

In recent years, an endeavor called smart factories aiming at optimization of factories by utilizing communication data of control devices in factories has been promoted. On the other hand, there is concern of new types of cyberattack targeting smart factories appearing, and security countermeasures are urgently required. Defending against new types of cyberattacks is difficult, and detection technologies are desired. In particular, anomaly-type abnormality detection in which deep learning for automatically learning normal features from input data is used is expected to enable new types of cyberattacks to be detected with high accuracy.

However, a deep learning determination process is a black box. When an actual operation is assumed, people in charge of security cannot specify causes of abnormality because it is not possible to describe causes detected as abnormalities. Therefore, in recent years, a technology called a so-called interpretable AI for describing the causes of abnormalities from deep learning has been disclosed (see Non Patent Literature 1).

Citation List

Patent Literature

Patent Literature 1: EP4307637A1, relevant to novelty only, relates to determining abnormal vector bytes based on a comparison of normal packet data and abnormal packet data. Paragraph [0032] of the document requires that the comparison of normal and abnormal packet data is performed if the number of bytes of the normal packet data and the abnormal packet data is the same.

Non Patent Literature

Non Patent Literature 1: William Briguglio and Sherif Saad, "Interpreting Machine Learning Malware Detectors Which Leverage N-gram Analysis", [online], [retrieved on April 14, 2021], Internet <URL: https://arxiv.org/abs/2001.10916.pdf> Non Patent Literature 2: Xiao Zhang, Manish Marwah, I-ta Lee, Martin Arlitt, Dan Goldwasser, "ACE-An Anomaly Contribution Explainer for Cyber-Security Applications", [online], [retrieved on April 14, 2021], Internet <URL: https://arxiv.org/pdf/1912.00314.pdf>

Summary of Invention

Technical Problem

However, in the related technologies, causes of abnormalities are specified with communication data with fixed lengths as abnormality detection targets, and the causes of the abnormalities cannot be specified with the communication data with variable lengths as abnormality detection targets.

The present invention has been made in view of the foregoing circumstances, and an object of the present invention is to set communication data with a variable length as an abnormality detection target and specify a cause of an abnormality.

Solution to Problem

The object of the invention is solved by the subject matter of the independent claims. Advantageous embodiments of the invention are disclosed in the dependent claims. An example includes: an estimation unit configured to estimate normal data having maximum similarity between the abnormal data determined to be abnormal and each of a plurality of pieces of normal data determined to be normal; and an extraction unit configured to compare the abnormal data with normal data estimated to have the maximum similarity and extract a portion of the abnormal data having no portion corresponding to the normal data as a portion causing abnormality.

Advantageous Effects of Invention

According to the present invention, it is possible to set communication data with a variable length as an abnormality detection target and specify a cause of an abnormality.

Brief Description of Drawings

Fig. 1 is a diagram illustrating an overview of an estimation device.
Fig. 2 is a schematic diagram illustrating a schematic configuration of an estimation device.
Fig. 3 is a diagram illustrating an extraction processing result.
Fig. 4 is a flowchart illustrating an estimation processing procedure.
Fig. 5 is a diagram illustrating an example.
Fig. 6 is a diagram illustrating a computer that executes an estimation program.

Description of Embodiments

Hereinafter, an embodiment of the present invention will be described in detail with reference to the drawings. The present invention is not limited by this embodiment. Further, in the description of the drawings, the same portions are denoted by the same reference numerals.

[Outline of Estimation Device]

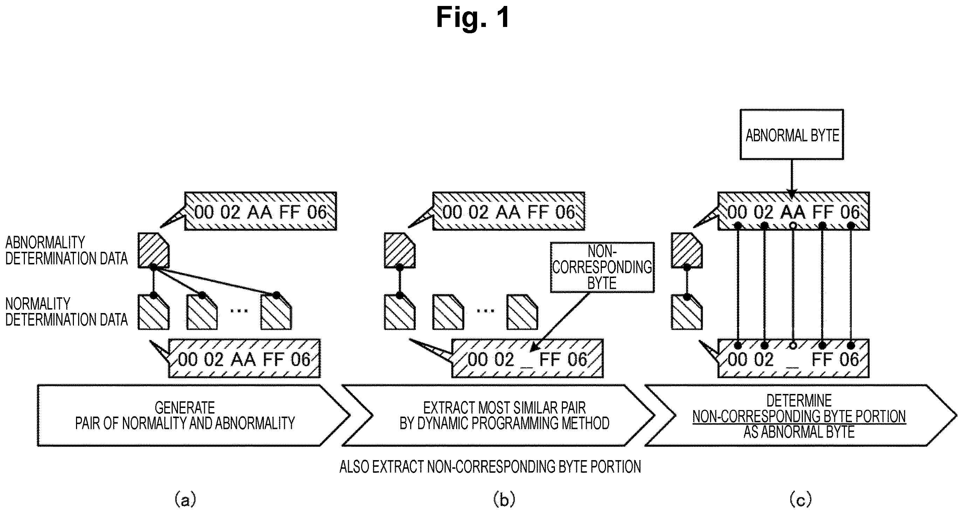

Fig. 1 is a diagram illustrating an overview of an estimation device. As illustrated in Fig. 1, the estimation device according to the present embodiment sets communication data with a variable length as an abnormality detection target and specifies a byte portion estimated as a cause of an abnormality of the communication data. Specifically, as illustrated in Fig. 1(a), for a pair of communication data determined to be abnormal (abnormality determination data) and a plurality of pieces of communication data determined to be normal (normality determination data), normality determination data most similar to the abnormality determination data is specified as illustrated in Fig. 1(b). At that time, the estimation device calculates similarity between abnormality determination data and each piece of normality determination data by applying a dynamic programming method of obtaining all calculation results while recording the calculation results of the plurality of divided portions. Of the portions, as illustrated in Fig. 1(c), a portion in which there is a gap is specified and is estimated as an abnormal byte that has caused abnormality determination.

[Configuration of estimation device]

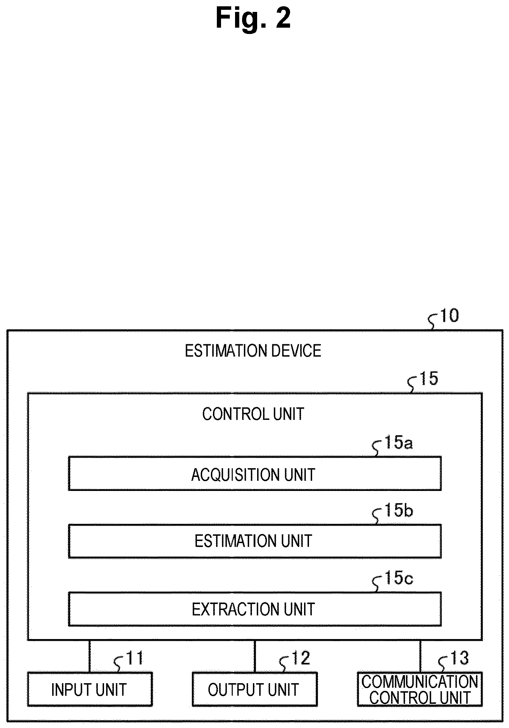

Fig. 2 is a schematic diagram illustrating a schematic configuration of an estimation device. As illustrated in Fig. 2, the estimation device 10 is implemented by a general-purpose computer such as a personal computer and includes an input unit 11, an output unit 12, a communication control unit 13, and a control unit 15.
The input unit 11 is implemented with an input device such as a keyboard or a mouse and inputs various types of instruction information such as processing start to the control unit 15 in response to an input operation of an operator. The output unit 12 is implemented with a display device such as a liquid crystal display, a printing device such as a printer, or the like.
The communication control unit 13 is implemented with a network interface card (NIC) or the like and controls communication between an external device such as a server and the control unit 15 via a network. For example, the communication control unit 13 controls communication between the control unit 15 and a management device or the like that manages a data set or a parameter of an estimation processing target to be described below.
The control unit 15 is implemented with a central processing unit (CPU) or the like and executes a processing program stored in a memory. As a result, as illustrated in Fig. 2, the control unit 15 functions as an acquisition unit 15a, an estimation unit 15b, and an extraction unit 15c. Each or some of these functional units may be mounted on different hardware. For example, the estimation unit 15b and the extraction unit 15c may be mounted on different hardware. The control unit 15 may include other functional units.
The acquisition unit 15a acquires data determined to be abnormal and a plurality of pieces of data determined to be normal. For example, the acquisition unit 15a acquires, via the input unit 11 or via the communication control unit 13 from a management device or the like that manages results of deep learning, a data set of abnormal data of an estimation processing target to be described below or normal data used for the estimation process, a parameter used for the estimation process, and the like.

The acquisition unit 15a may store the acquired data in a storage unit (not illustrated) implemented by a semiconductor memory element such as a random access memory (RAM) or a flash memory, or a storage device such as a hard disk or an optical disk. Alternatively, the acquisition unit 15a may transfer these pieces of information to the estimation unit 15b to be described below without storing the information in the storage unit.

The estimation unit 15b estimates normal data that has most similarity between the abnormal data determined to be abnormal and each of the plurality of normal data determined to be normal. Specifically, the estimation unit 15b evaluates similarity between a payload of a packet determined to be abnormal and a set of payloads of packets determined to be normal using the acquired data, and estimates a payload that is most similar to the payload of the packet determined to be abnormal.

For example, the estimation unit 15b calculates similarity between the abnormal data and the normal data by applying a dynamic programming method. Here, the estimation device 10 sets, as a processing target, a payload of a packet of one piece of abnormal data and, for example, 100 or more pieces of normal data among data determined to be abnormal or normal in accordance with abnormality detection by deep learning. The payload is, for example, a character string of hexadecimal digits represented as [00 00 10 FF 10] or the like, and is a data string with a variable length which is 1 or more in length.

The estimation unit 15b calculates the similarity between the abnormal data and the normal data assuming that characters appearing in the abnormal data and the normal data are looped continuously. That is, the estimation unit 15b assumes that byte characters (00 to FF) appearing in data are looped and sets similarity between, for example, byte characters "00" and "FF" and similarity between "00" and "01" to the same value.

The estimation unit 15b calculates similarity S between one abnormal data string $X=[x_1, x_2,..., x_n]$ and one normal data string $Y=[y_1, y_2,..., y_m]$ among the plurality of normal data strings $Y^1, Y^2,..., Y^k,...,$ and $Y^l$. At that time, the estimation unit 15b calculates $Y^{target}$ with the most similarity to X using the dynamic programming method.

The dynamic programming method can be expressed as in the following Expressions (1) and (2).

[Math. 1]

$$S(i, j) = max \begin{cases} S(i-1, j-1) + s(x_i, y_j) \\ S(i-1, j) - d \\ S(i, j-1) - d \end{cases} \cdots (1)$$

[Math. 2]

$$s = \begin{cases} 10, & if(x_i = y_j) \\ -|x_i - y_j| & if(x_i \neq y_j) \end{cases} \cdots (2)$$

The foregoing Expression (1) is an expression in which quantifies similarity $S(i, j)$ between X and Y using similarity $s(x_i, y_j)$ between one character $x_i$ in an abnormal data string X and one character $y_j$ in a normal data string Y.

In the first row of the foregoing Expression (1), as shown in the foregoing Expression (2), when $x_i$ matches $y_j$, +10 is set as $s(x_i, y_j)$. When $x_i$ does not match $y_j$, a distance between $x_i$ and $y_j$ is subtracted.

Alternatively, for example, when comparing with the byte character "00" of the abnormal data, the estimation unit 15b may set in advance such that the character similarity s to the byte character "00" of the normal data of the comparison destination is + 10, the character similarity s to "01", "02", "03", "FF", "FE", and "FD" is + 5, and the similarity s to other byte characters is -5.

In this way, the estimation unit 15b calculates the similarity between the abnormal data and the normal data using the similarity s between the characters of the abnormal data and the normal data as a value of a predetermined range.

After evaluating the similarity between the abnormal data string X and a k-th normal data string $Y^k$, the estimation unit 15b repeats a process of evaluating similarity between the abnormal data string X and a (k+1)th normal data string $y^{k+1}$ until an l-th normal data string $Y^l$.

In this way, the estimation unit 15b can compare pieces of data with a variable length using the dynamic programming method.

Thereafter, the estimation unit 15b calculates the similarity between the abnormal data string X and each normal data string Y by performing correction using an anomaly score. That is, the estimation unit 15b calculates, as the similarity between the abnormal data string X and each normal data string Y, a value obtained by multiplying the foregoing S(i, j) by an AI abnormality score (anomaly score) of a result of the abnormality detection by the deep learning of each normal data string Y as a bias. For example, the estimation unit 15b applies the bias so that the similarity score of the normal data having a lower anomaly score among the normal data with respect to the abnormal data increases. Then, the estimation unit 15b specifies the normal data string Y in which the calculated similarity is a highest value as $Y^{target}$.

The extraction unit 15c compares the abnormal data with the normal data estimated to have the maximum similarity and extracts a portion of the abnormal data having no portion corresponding to the normal data as a cause portion of the abnormality. Specifically, the extraction unit 15c extracts a portion having a gap from the estimated payload as an abnormal portion in the payload of the packet determined to be abnormal.

For example, when a payload of abnormal data of a comparison source is "00 11 FF FD" and a payload of normal data of a comparison destination is "00 FF FD," there is no portion corresponding to the second byte "11" of the comparison source in the normal data. Therefore, the extraction unit 15c determines and extracts an abnormal portion. In this case, the extraction unit 15c substitutes the second byte of the normal data with a blank character.

Even when the second byte of the normal data is not "11," the second byte of the abnormal data and the normal data may be extracted as a portion having a gap.

The extraction unit 15c outputs the extracted abnormal portion via the output unit 12. For example, the extraction unit 15c outputs a payload of a pair of abnormal data and normal data to the output unit 12 such as a display, and highlights a portion having a gap determined as an abnormal portion. The extraction unit 15c may output information regarding the extracted abnormal point to another information processing device via the communication control unit 13.

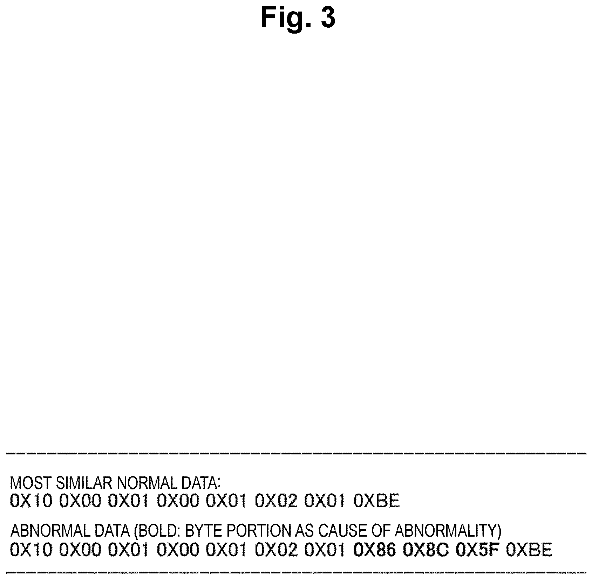

Here, Fig. 3 is a diagram illustrating an extraction processing result. In Fig. 3, normal data having most similarity to abnormal data and a portion having a gap in the abnormal data from the normal data are exemplified. In Fig. 3, "0X86 0X8C 0X5F" is displayed as an abnormal portion having a gap as indicated in bold.

[Estimation Processing]

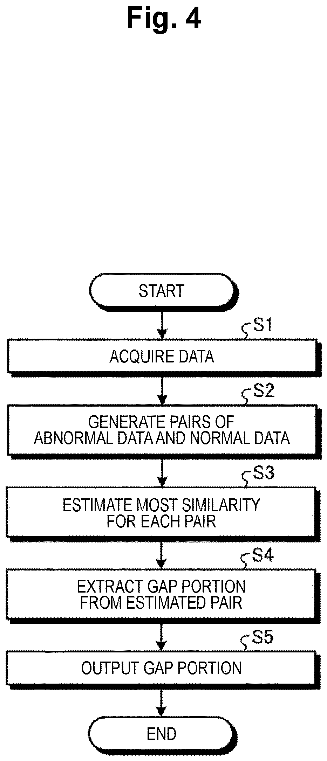

Next, an estimation process performed by the estimation device 10 according to the present embodiment will be described with reference to Fig. 4. Fig. 4 is a flowchart illustrating an estimation process procedure. The flowchart of Fig. 4 is started, for example, at a timing at which an operation of giving an instruction to start the estimation process is input.

First, the acquisition unit 15a acquires abnormal data determined to be abnormal and a plurality of pieces of normal data determined to be normal (step S1).

Subsequently, the estimation unit 15b generates pairs of abnormal data and normal data (step S2). The estimation unit 15b estimates a pair having the most similarity between the abnormal data and the normal data among the generated pairs (step S3).

For example, the estimation unit 15b calculates the similarity of each pair using dynamic programming method. At that time, the estimation unit 15b calculates the similarity of each pair assuming that the characters appearing in the abnormal data and the normal data continuously loop. The estimation unit 15b calculates the similarity of each pair using the similarity of the characters of the abnormal data and the normal data as a value of a predetermined range. The estimation unit 15b calculates the similarity of each pair by performing correction using the anomaly score.

The extraction unit 15c compares the abnormal data with the normal data estimated to have the most similarity and extracts a portion of the abnormal data having no portion corresponding to the normal data and having a gap as a cause portion of the abnormality (step S4).

Then, the extraction unit 15c highlights the portion having the gap determined as the abnormal portion and outputs the highlighted portion to the output unit 12 (step S5). Consequently, a series of estimation processes end.

As described above, in the estimation device 10, the estimation unit 15b estimates the normal data having the most similarity between the abnormal data determined to be abnormal and each of the plurality of normal data determined to be normal. The extraction unit 15c compares the abnormal data with the normal data estimated to have the maximum similarity, and extracts a portion of the abnormal data having no portion corresponding to the normal data as a cause portion of the abnormality.

In this way, the estimation device 10 can specify a portion different from the normal data of the abnormal data most similar to the normal data as a portion causing the abnormality regardless of lengths of the normal data and the abnormal data. Accordingly, estimation device 10 can specify the cause of the abnormality by using the communication data with a variable length as an abnormality detection target.

The estimation unit 15b calculates the similarity between the abnormal data and the normal data by applying the dynamic programming method. In this way, the estimation device 10 can accurately specify the cause of the abnormality by specifically calculating the similarity between the abnormal data and the normal data using the communication data with a variable length as the abnormality detection target.

The estimation unit 15b calculates the similarity between the abnormal data and the normal data assuming that characters appearing in the abnormal data and the normal data continuously loop. As described above, the estimation device 10 can specify the cause of the abnormality by specifically efficiently calculating the similarity.

The estimation unit 15b calculates the similarity between the abnormal data and the normal data using the similarity between the characters of the abnormal data and the characters of the normal data as a value of the predetermined range. As described above, the estimation device 10 can accurately specify the cause of the abnormality by specifically efficiently calculating the similarity.

The estimation unit 15b calculates the similarity between the abnormal data and the normal data by performing correction using the anomaly score. In this way, the estimation device 10 can specify the cause of the abnormality by specifically calculating the similarity with high accuracy.

[Example]

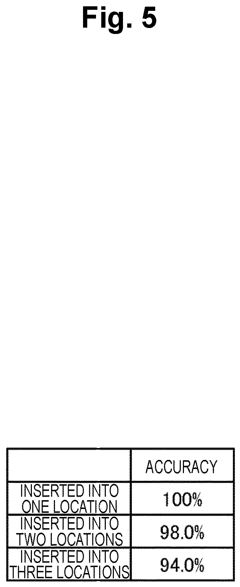

Fig. 5 is a diagram illustrating an example. In the present example, estimation accuracy of the byte portion of the abnormal communication data generated in an assumed cyberattack scenario was measured as described below.

As the cyberattack scenario, a malicious code insertion attack in which a malicious person inserts a code for executing a malicious program into a part of communication that is normally operating to enable a fraudulent operation is assumed. Then, a byte portion into which the malicious code was inserted was estimated as an abnormal portion.

For example, in the case of normal communication "00 01 00 00 00 41 6b" and abnormal communication "00 01 00 00 54 1b FF FF 31 00 41 6b," an inserted malicious code "54 1b FF FF 31" is specified as an abnormal portion.

Using 2133 pieces of normal data and 100 pieces of abnormal data for each length (three types of 1 to 3) of the malicious code to be inserted in packets to which a normal label or an abnormal label is given by deep learning, a byte sequence of the malicious code was inserted into one random location of the normal data.

An abnormal portion was determined for each packet. At that time, each byte was converted from hexadecimal digits (0x00 to 0xff) to numerical values (0 to 255) in order to obtain a data format which can be used in the dynamic programming method.

Fig. 5 illustrates an evaluation result of Example. In evaluation, it is confirmed whether the estimation of the byte sequence of the abnormal position completely matches for each packet. When the estimation of the byte sequence of the abnormal position completely matches, a correct answer was set. When the estimation of the byte sequence of the abnormal position completely does not match, an error was set.

As illustrated in Fig. 5, when the abnormal byte sequence is inserted into one location, the abnormal position can be estimated in all the packets. When an abnormal byte sequence is inserted into two locations, e correct estimation cannot be performed for two packets. When an abnormal byte sequence is inserted into three locations, correct estimation cannot be performed for six packets. However, it has been confirmed that the estimation can be performed with 90% or more accuracy as a whole.

[Program]

It is also possible to produce a program that describes the process executed by the estimation device 10 according to the above embodiment. in a computer executable language. As an embodiment, the estimation device 10 can be mounted by installing an estimation program executing the foregoing estimation process as package software or online software on a desired computer. For example, by causing an information processing device to perform the estimation program, the information processing device can be caused to function as the estimation device 10. The information processing device also includes a mobile communication terminal such as a smartphone, a mobile phone, and a personal handyphone system (PHS) and a slate terminal such as a personal digital assistant (PDA). The functions of the estimation device 10 may be mounted on a cloud server.

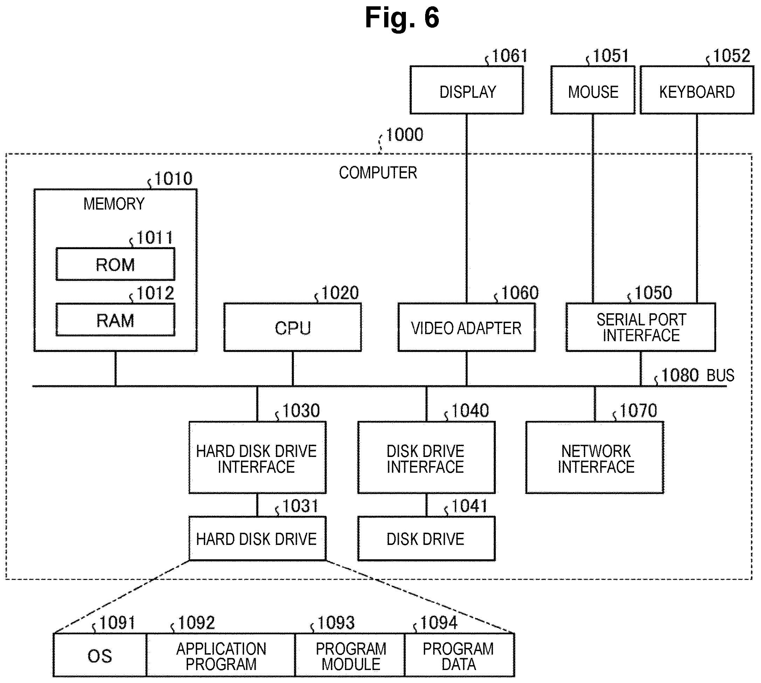

Fig. 6 is a diagram illustrating an example of a computer that executes an estimation program. A computer 1000 includes, for example, a memory 1010, a CPU 1020, a hard disk drive interface 1030, a disk drive interface 1040, a serial port interface 1050, a video adapter 1060, and a network interface 1070. These units are connected to each other by a bus 1080.

The memory 1010 includes a read only memory (ROM) 1011 and a RAM 1012. The ROM 1011 stores, for example, a boot program such as a basic input output system (BIOS). The hard disk drive interface 1030 is connected to a hard disk drive 1031. The disk drive interface 1040 is connected to a disk drive 1041. For example, a removable storage medium such as a magnetic disk or an optical disc is inserted into the disk drive 1041. The serial port interface 1050 is connected to, for example, a mouse 1051 and a keyboard 1052. The video adapter 1060 is connected to, for example, a display 1061.

Here, the hard disk drive 1031 stores, for example, an OS 1091, an application program 1092, a program module 1093, and program data 1094. All of the information described in the foregoing embodiment is stored in the hard disk drive 1031 or the memory 1010, for example.

The estimation program is stored in the hard disk drive 1031 as the program module 1093 in which commands to be executed by the computer 1000, for example, are described. Specifically, the program module 1093 in which each process executed by the estimation device 10 described in the foregoing embodiment is described is stored in the hard disk drive 1031.

Data used in information process performed by the estimation program is stored as the program data 1094 in, for example, the hard disk drive 1031. The CPU 1020 reads, into the RAM 1012, the program module 1093 and the program data 1094 stored in the hard disk drive 1031 as necessary and executes each procedure described above.

The program module 1093 and the program data 1094 related to the estimation program are not limited to being stored in the hard disk drive 1031, and may be stored in, for example, a removable storage medium and read by the CPU 1020 via the disk drive 1041 or the like. Alternatively, the program module 1093 and the program data 1094 related to the estimation program may be stored in another computer connected via a network such as a local area network (LAN) or a wide area network (WAN) and may be read by the CPU 1020 via the network interface 1070.

Although the embodiments to which the invention made by the present inventors is applied have been described above, the present invention is not limited by the description and the drawings forming a part of the disclosure of the present invention according to the present embodiments. In other words, other embodiments, examples, operational technologies, and the like made by those skilled in the art and the like on the basis of the present embodiment are all included in the scope of the present invention.

Reference Signs List

| | |
|---|---|
| 10 | Estimation device |
| 11 | Input unit |
| 12 | Output unit |
| 13 | Communication control unit |
| 15 | Control unit |
| 15a | Acquisition unit |
| 15b | Estimation unit |
| 15c | Extraction unit |

**Claims**

1. An estimation device (10) comprising:

   an estimation unit (15b) configured to estimate normal data having maximum similarity between abnormal data determined to be abnormal and each of a plurality of pieces of normal data determined to be normal, wherein the plurality of pieces have variable length; and
   an extraction unit (15c) configured to compare the abnormal data with the normal data estimated to have the maximum similarity and extract a portion of the abnormal data having no portion corresponding to the normal data as a portion causing abnormality.

2. The estimation device (10) according to claim 1, wherein the estimation unit (15b) calculates similarity by applying a dynamic programming method.

3. The estimation device (10) according to claim 2, wherein the estimation unit (15b) calculates similarity assuming that characters appearing in the abnormal data and the normal data continuously loop.

4. The estimation device (10) according to claim 2, wherein the estimation unit (15b) calculates the similarity by using similarity between characters of the abnormal data and characters of the normal data as a value of a predetermined range.

5. The estimation device (10) according to claim 2, wherein the estimation unit (15b) calculates the similarity by performing correction using an anomaly score.

6. An estimation method executed by an estimation device (10), the estimation method comprising:

   an estimation procedure of estimating normal data having maximum similarity between abnormal data determined to be abnormal and each of a plurality of pieces of normal data determined to be normal, wherein the plurality of pieces have variable length; and

an extraction procedure of comparing the abnormal data with the normal data estimated to have the maximum similarity and extracting a portion of the abnormal data having no portion corresponding to the normal data as a portion causing abnormality.

7. An estimation program that causes a computer (1000) to execute:

an estimation step of estimating normal data having maximum similarity between abnormal data determined to be abnormal and each of a plurality of pieces of normal data determined to be normal, wherein the plurality of pieces have variable length; and

an extraction step of comparing the abnormal data with the normal data estimated to have the maximum similarity and extracting a portion of the abnormal data having no portion corresponding to the normal data as a portion causing abnormality.


## Patentansprüche

1. Abschätzungsvorrichtung (10), umfassend:

eine Abschätzungseinheit (15b), die so konfiguriert ist, dass sie normale Daten abschätzt, die maximale Ähnlichkeit zwischen anormalen Daten, die als anormal bestimmt wurden, und jedem einer Vielzahl von normalen Datensätzen aufweisen, wobei die Vielzahl von Datensätzen als normal bestimmt wurde, wobei die Vielzahl von Datensätzen variable Länge aufweist; und

eine Extraktionseinheit (15c), die so konfiguriert ist, dass sie die anormalen Daten mit den normalen Daten vergleicht, für die abgeschätzt wurde, dass sie die maximale Ähnlichkeit aufweisen, und einen Abschnitt der anormalen Daten extrahiert, die keinen Abschnitt aufweisen, der den normalen Daten als ein Abschnitt entspricht, der Anomalie verursacht.

2. Abschätzungsvorrichtung (10) nach Anspruch 1, wobei die Abschätzungseinheit (15b) Ähnlichkeit durch Anwenden eines dynamischen Programmierverfahrens berechnet.

3. Abschätzungsvorrichtung (10) nach Anspruch 2, wobei die Abschätzungseinheit (15b) Ähnlichkeit unter der Annahme berechnet, dass Zeichen, die in den anormalen Daten und den normal Daten auftreten, kontinuierlich loopen.

4. Abschätzungsvorrichtung (10) nach Anspruch 2, wobei die Abschätzungseinheit (15b) die Ähnlichkeit durch Verwenden von Ähnlichkeit zwischen Zeichen von den anormalen Daten und Zeichen von den normalen Daten als einen Wert eines vorbestimmten Bereichs berechnet.

5. Abschätzungsvorrichtung (10) nach Anspruch 2, wobei die Abschätzungseinheit (15b) die Ähnlichkeit durch Durchführen von Korrektur unter Verwendung eines Anomalie-Scores berechnet.

6. Abschätzungsverfahren, das durch eine Abschätzungsvorrichtung (10) ausgeführt, wobei das Abschätzungsverfahren Folgendes umfasst:

ein Abschätzungsvorgehen zum Abschätzen von normalen Daten, die maximale Ähnlichkeit zwischen anormalen Daten, die als anormal bestimmt wurden, und jedem einer Vielzahl von normalen Datensätzen aufweisen, wobei die Vielzahl von Datensätzen als normal bestimmt wurde, wobei die Daten variable Länge aufweisen; und ein Extraktionsvorgehen zum Vergleichen der anormalen Daten mit den normalen Daten, für die abgeschätzt wurde, dass sie die maximale Ähnlichkeit aufweisen, und Extrahieren eines Abschnitts der anormalen Daten, die keinen Abschnitt aufweisen, der den normalen Daten als ein Abschnitt entspricht, der Anomalie verursacht.

7. Abschätzungsprogramm, das bewirkt, dass ein Computer (1000) Folgendes ausführt:

einen Abschätzungsschritt zum Abschätzen von normalen Daten, die maximale Ähnlichkeit zwischen anormalen Daten, die als anormal bestimmt wurden, und jedem einer Vielzahl von normalen Datensätzen aufweisen, wobei die Vielzahl von Datensätzen als normal bestimmt wurde, wobei die Vielzahl von Datensätzen variable Länge aufweist; und

einen Extraktionsschritt zum Vergleichen der anormalen Daten mit den normalen Daten, für die abgeschätzt wurde, dass sie die maximale Ähnlichkeit aufweisen, und Extrahieren eines Abschnitts der anormalen Daten, die keinen Abschnitt aufweisen, der den normalen Daten als ein Abschnitt entspricht, der Anomalie verursacht.

**Revendications**

1.  Dispositif d'estimation (10) comprenant :

    une unité d'estimation (15b) configurée pour estimer des données normales présentant une similarité maximale entre des données anormales déterminées comme étant anormales et chacun d'une pluralité d'éléments de données normales déterminés comme étant une pluralité d'éléments normaux, dans lequel les éléments de données présentent une longueur variable ; et
    une unité d'extraction (15c) configurée pour comparer les données anormales avec des données normales estimées comme présentant la similarité maximale et extraire, en tant que portion cause de l'anomalie, une portion des données anormales ne présentant aucune portion correspondant aux données normales.

2.  Dispositif d'estimation (10) selon la revendication 1, dans lequel l'unité d'estimation (15b) calcule une similarité en appliquant un procédé de programmation dynamique.

3.  Dispositif d'estimation (10) selon la revendication 2, dans lequel l'unité d'estimation (15b) calcule une similarité en supposant que les caractères apparaissant dans les données anormales et les données normales bouclent de manière continue.

4.  Dispositif d'estimation (10) selon la revendication 2, dans lequel l'unité d'estimation (15b) calcule la similarité en utilisant, en tant que valeur d'une plage prédéterminée, une similarité entre des caractères des données anormales et des caractères des données normales.

5.  Dispositif d'estimation (10) selon la revendication 2, dans lequel l'unité d'estimation (15b) calcule la similarité en mettant en œuvre une correction à l'aide d'un score d'anomalie.

6.  Procédé d'estimation mis en œuvre par un dispositif d'estimation (10), le procédé d'estimation comprenant :

    une procédure d'estimation consistant à estimer des données normales présentant une similarité maximale entre des données anormales déterminées comme étant anormales et chacun d'une pluralité d'éléments de données normales déterminés comme étant une pluralité d'éléments normaux, dans lequel les éléments de données présentent une longueur variable ; et
    une procédure d'extraction consistant à comparer les données anormales aux données normales estimées comme présentant la similarité maximale et à extraire, en tant que portion cause de l'anomalie, une portion des données anormales ne présentant aucune portion correspondant aux données normales.

7.  Programme d'estimation qui amène un ordinateur (1000) à mettre en œuvre :

    une étape d'estimation consistant à estimer des données normales présentant une similarité maximale entre des données anormales déterminées comme étant anormales et chacun d'une pluralité d'éléments de données normales déterminés comme étant une pluralité d'éléments normaux, dans lequel les éléments de données présentent une longueur variable ; et
    une étape d'extraction consistant à comparer les données anormales aux données normales estimées comme présentant la similarité maximale et à extraire, en tant que portion cause de l'anomalie, une portion des données anormales ne présentant aucune portion correspondant aux données normales.

# Fig. 1

**(a)** GENERATE PAIR OF NORMALITY AND ABNORMALITY

**(b)** EXTRACT MOST SIMILAR PAIR BY DYNAMIC PROGRAMMING METHOD

ALSO EXTRACT NON-CORRESPONDING BYTE PORTION

**(c)** DETERMINE NON-CORRESPONDING BYTE PORTION AS ABNORMAL BYTE

ABNORMALITY DETERMINATION DATA

NORMALITY DETERMINATION DATA

00 02 AA FF 06

00 02 AA FF 06

00 02 __ FF 06

NON-CORRESPONDING BYTE

ABNORMAL BYTE

00 02 AA FF 06

00 02 __ FF 06

EP 4 325 385 B1

# Fig. 2

10

ESTIMATION DEVICE

15

CONTROL UNIT

15a

ACQUISITION UNIT

15b

ESTIMATION UNIT

15c

EXTRACTION UNIT

11

INPUT UNIT

12

OUTPUT UNIT

13

COMMUNICATION CONTROL UNIT

# Fig. 3

---

MOST SIMILAR NORMAL DATA:
0X10 0X00 0X01 0X00 0X01 0X02 0X01 0XBE

ABNORMAL DATA (BOLD: BYTE PORTION AS CAUSE OF ABNORMALITY)
0X10 0X00 0X01 0X00 0X01 0X02 0X01 **0X86 0X8C 0X5F** 0XBE

---

# Fig. 4

```
          ┌─────────────────┐
          │      START      │
          └─────────────────┘
                   │
                   ▼            ⌐S1
     ┌──────────────────────────┐
     │       ACQUIRE DATA       │
     └──────────────────────────┘
                   │
                   ▼            ⌐S2
     ┌──────────────────────────┐
     │     GENERATE PAIRS OF     │
     │ ABNORMAL DATA AND NORMAL DATA │
     └──────────────────────────┘
                   │
                   ▼            ⌐S3
     ┌──────────────────────────┐
     │   ESTIMATE MOST SIMILARITY │
     │        FOR EACH PAIR       │
     └──────────────────────────┘
                   │
                   ▼            ⌐S4
     ┌──────────────────────────┐
     │    EXTRACT GAP PORTION     │
     │    FROM ESTIMATED PAIR     │
     └──────────────────────────┘
                   │
                   ▼            ⌐S5
     ┌──────────────────────────┐
     │     OUTPUT GAP PORTION     │
     └──────────────────────────┘
                   │
                   ▼
          ┌─────────────────┐
          │       END       │
          └─────────────────┘
```

# Fig. 5

|  | ACCURACY |
|---|---|
| INSERTED INTO ONE LOCATION | 100% |
| INSERTED INTO TWO LOCATIONS | 98.0% |
| INSERTED INTO THREE LOCATIONS | 94.0% |

## Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 4307637 A1

### Non-patent literature cited in the description

- **WILLIAM BRIGUGLIO** ; **SHERIF SAAD**. *Interpreting Machine Learning Malware Detectors Which Leverage N-gram Analysis*, 14 April 2021, https://arxiv.org/abs/2001.10916.pdf

- **XIAO ZHANG** ; **MANISH MARWAH** ; **I-TA LEE** ; **MARTIN ARLITT** ; **DAN GOLDWASSER**. *ACE-An Anomaly Contribution Explainer for Cyber-Security Applications*, 14 April 2021, https://arxiv.org/pdf/1912.00314.pdf